# EUROPÄISCHE PATENTSCHRIFT

(11) **EP 3 803 729 B1**
(45) Veröffentlichungstag und Bekanntmachung des Hinweises auf die Patenterteilung: **29.04.2026**
(21) Anmeldenummer: 19725096.2
(22) Anmeldetag: 15.05.2019
(51) Int. Cl.: G06Q 10/06, G06Q 10/00

(54) **KONZEPT ZUM VERSORGEN HOCHAUTOMATISIERTER ODER AUTONOMER FORTBEWEGUNGSMITTEL**
CONCEPT FOR SERVICING HIGHLY AUTOMATED OR AUTONOMOUS MEANS OF TRANSPORT
CONCEPT D'ALIMENTATION DE MOYENS DE LOCOMOTION À AUTOMATISATION ÉLEVÉE OU AUTONOMES

(30) Priorität: 07.06.2018 DE 102018209068
(43) Veröffentlichungstag der Anmeldung: 14.04.2021
(73) Patentinhaber: VOLKSWAGEN AKTIENGESELLSCHAFT, 38440 Wolfsburg (DE)
(72) Erfinder: STOCK, Gregor, 38448 Wolfsburg (DE); KARRENBERG, Simon, 38104 Braunschweig (DE); SCHRÖDER, Hendrik, 38173 Sickte (DE)
(86) Internationale Anmeldenummer: PCT/EP2019/062476
(87) Internationale Veröffentlichungsnummer: WO 2019/233718

(56) Entgegenhaltungen:
- WO-A1-2018/024336
- DE-A1- 10 322 765
- DE-A1- 102016 001 907
- WIKIPEDIA: "Pit stop", INTERNET ARTICLE, 6 May 2018 (2018-05-06), XP055599305, Retrieved from the Internet <URL:https://en.wikipedia.org/w/index.php?title=Pit_stop&oldid=839880211> [retrieved on 20190625]
- JONATHAN NOBLE: "Formula One Racing for Dummies", 21 November 2003, FOR DUMMIES, ISBN: 978-0-7645-7015-5, XP055599300
- AUTOBILD: "Smart vision EQ fortwo: Test und Infos", INTERNET ARTICLE, 4 November 2017 (2017-11-04), XP055599168, Retrieved from the Internet <URL:https://www.autobild.de/artikel/smart-vision-eq-fortwo-test-und-infos-12497631.html> [retrieved on 20190625]
- WIKIPEDIA: "Pit stop", INTERNET ARTICLE, 6 May 2018 (2018-05-06), XP055599305, Retrieved from the Internet <URL:https://en.wikipedia.org/w/index.php?title=Pit_stop&oldid=839880211> [retrieved on 20190625]
- JONATHAN NOBLE: "Formula One Racing for Dummies", 21 November 2003, FOR DUMMIES, ISBN: 978-0-7645-7015-5, XP055599300
- AUTOBILD: "Smart vision EQ fortwo: Test und Infos", INTERNET ARTICLE, 4 November 2017 (2017-11-04), XP055599168, Retrieved from the Internet <URL:https://www.autobild.de/artikel/smart-vision-eq-fortwo-test-und-infos-12497631.html> [retrieved on 20190625]

## Beschreibung

Die vorliegende Erfindung betrifft ein Konzept zum Versorgen hochautomatisierter oder autonomer Fortbewegungsmittel. Die Erfindung betrifft insbesondere eine Vorrichtung zum Versorgen hochautomatisierter oder autonomer Fortbewegungsmittel sowie ein Verfahren, eine Vorrichtung zum Betreiben einer solchen Vorrichtung.

In Zukunft wird ein zunehmender Anteil der Personen- und Güterbeförderung durch hochautomatisierte oder autonome Fortbewegungsmittel übernommen werden. Die Betreiber dieser Fortbewegungsmittel, insbesondere die Flottenbetreiber oder Mobilitätsdienstleister, sind auf einen hocheffizienten und nahtlos in den Nutzbetrieb integrierten Service der Fortbewegungsmittel angewiesen, um eine hohe Betriebsdauer und Qualität der Fortbewegungsmittel bei möglichst niedrigen Kosten gewährleisten zu können. Vorrangig wird es sich bei den Fortbewegungsmitteln um Kraftfahrzeuge handeln, außerhalb des Automobilbereichs ist aber auch die Nutzung von Booten, Drohnen, Flugzeugen und Hubschraubern, insbesondere persönlichen Luftfahrzeugen (PAV: Personal Air Vehicles), zu erwarten. Zusätzlich nutzen in Entwicklung befindliche Mikromobilitätskonzepte u.a. Kleinstfahrzeuge und selbstfahrende Plattformen.

Zur Zeit werden die Serviceleistungen getrennt und in der Regel durch externe Anbieter angeboten. Beispielsweise existieren Waschstraßen oder Portalwaschanlagen für die Fahrzeugaußenreinigung, während es eigenständige Anbieter für die manuelle Fahrzeuginnenreinigung gibt. Das Laden wiederum erfolgt mittels öffentlich zugänglicher oder privater Ladesäulen. Manuelle Umbauten, Wartung und Reparatur werden durch Werkstätten ausgeführt.

Lediglich im Motorsport ist es üblich, verschiedene Serviceleistungen gebündelt im Rahmen eines Pit Stops durchzuführen, wie dies beispielsweise im Wikipedia-Eintrag "Pit stop" (https://en.wikipedia.org/w/index.php?title=Pit_stop&oldid=839880211) oder im Buch "Formula One Racing for Dummies" von Jonathan Noble (ISBN 978-0-7645-7015-5) beschrieben ist.

Vor diesem Hintergrund beschreibt die DE 199 37 243 C1 eine Vorrichtung zur automatischen Durchführung einer Betankung und eines Reifenwechsels bei Rennfahrzeugen. Ein Rennfahrzeug fährt zunächst auf eine bewegliche Plattform im Boden, die im Anschluss mittels elektronischer Steuerungen exakt relativ zu einer Tankvorrichtung und zu Vorrichtungen für den Radwechsel ausgerichtet wird. Nach erfolgter Ausrichtung wird das Rennfahrzeug automatisch betankt. Zudem werden die Räder gewechselt.

Die DE 10 2008 055 881 A1 beschreibt eine Vorrichtung zum automatischen Laden von vollständig oder teilweise elektrisch betriebenen Fahrzeugen mittels einer autonomen Fahrzeugbewegung und eines automatisierten Ladevorgangs. Das Fahrzeug fährt autonom von einem Übergabebereich zu einer Ladestation, wo es automatisch mit einem Ladekontakt verbunden wird. Der Ladevorgang kann dabei mit einem regelmäßigen oder sensorisch veranlassten Waschvorgang, einer robotischen Reinigung, oder einer automatisierten optischen und fahrzeugtechnischen Inspektion verbunden werden.

Die DE 10 2012 024 865 A1 beschreibt eine Vorrichtung zum Befüllen eines Energiespeichers eines Fahrzeugs mit einer Betriebsressource mittels eines vom Fahrzeug separaten Befüllroboters. Zum Befüllen wird zunächst eine drahtlosen Kommunikation zwischen einem Steuersystem des Fahrzeugs und dem Befüllroboter initiiert. Anschließend werden Daten zumindest unidirektional zwischen dem Befüllroboter und dem Steuersystem übermittelt. In Abhängigkeit von den Daten erfolgt anschließend ein autonomes Positionieren des Fahrzeugs in einer Befüllposition an dem Befüllroboter mittels des Steuersystems.

Der Artikel "Car2Go der Zukunft" aus der Autobild (https://www.autobild.de/artikel/smart-vision-eq-fortwo-test-und-infos-12497631.html) beschreibt das Konzept eines autonomen Fahrzeugs für Car-Sharing-Dienste. Das Fahrzeug ist dazu eingerichtet, einen Nutzer am Standort des Nutzers abzuholen. Reinigung Wartung und Laden das Fahrzeugs übernimmt ein Roboter.

DE 10 2016 001 907 A1 beschreibt ein Verfahren zum Betreiben eines Navigationssystems, das ein Fahrzeug und eine fahrzeugexterne Recheneinrichtung umfasst. Bei dem Verfahren ermittelt eine fahrzeugseitige Navigationseinrichtung einen Wegsegmentzug, der wenigstens ein Wegsegment umfasst, aus von der Recheneinrichtung übermittelten Wegnetzdaten, die Wegsegmente eines Wegnetzes beschreiben. Der Wegsegmentzug wird zum Erreichen einer Zielposition von einer Startposition aus benötigt. Die Navigationseinrichtung überprüft die Passierbarkeit des Wegsegmentzugs für das Fahrzeug unter Berücksichtigung von Wegsegmentinformationen, die nach Aufforderung der Navigationseinrichtung durch die Recheneinrichtung übermittelt werden, und ermittelt eine aus einem als passierbar überprüften Wegsegmentzug abgeleitete Navigationsroute.

WO 2018/024336 A1 beschreibt ein System zur Fahrzeugpflege. Das System umfasst eine Fahrzeugpflegeeinrichtung und eine Steuereinrichtung, wobei Fahrzeuge zur Fahrzeugpflegeeinrichtung verbringbar und von dieser entfernbar sind und die Steuereinrichtung zur Kommunikation mit nichtbenutzergeführten Fahrzeugen ausgestaltet ist. In der Steuereinrichtung ist einem jeweiligen Fahrzeug zugeordnet ein Fahrzeugpflegeauftrag hinterlegbar, der Informationen über die Pflege des Fahrzeugs umfasst. Die Fahrzeuge sind abhängig vom Fahrzeugpflegeauftrag an der Fahrzeugpflegeeinrichtung behandelbar.

DE 103 22 765 A1 beschreibt einen automatisierten Speditionshof für autonom fahrbare Verkehrsmittel, mit einer Abgabestation, die zur Übergabe eines von einem Fahrzeugführer manuell zur Abgabestation überführten Verkehrsmittels an den Speditionshof dient und bei der Fahrzeugdaten an einen Kontrollrechner des Speditionshofs übermittelt werden, mit einer Entladestation zum Entladen des dahin überführten Verkehrsmittels in Abhängigkeit der Fahrzeugdaten, mit einer Wartungsstation zur Wartung des dahin überführten Verkehrsmittels in Abhängigkeit der Fahrzeugdaten, mit einer Beladestation zum Beladen des dahin überführten Verkehrsmittels in Abhängigkeit der Fahrzeugdaten und mit einer Abholstation, die zur Übergabe des dahin überführten Verkehrsmittels an den Fahrzeugführer in Abhängigkeit der Fahrzeugdaten dient.

Es ist eine Aufgabe der Erfindung, Lösungen für eine Versorgung hochautomatisierter oder autonomer Fortbewegungsmittel aufzuzeigen, die auf den hohen Automatisierungsgrad der Fortbewegungsmittel zugeschnitten sind.

Diese Aufgabe wird durch eine Vorrichtung mit den Merkmalen des Anspruchs 1, durch ein Verfahren zum Betreiben einer solchen Vorrichtung gemäß Anspruch 8 und durch eine Vorrichtung zum Betreiben einer solchen Vorrichtung gemäß Anspruch 10 gelöst. Bevorzugte Ausgestaltungen der Erfindung sind Gegenstand der abhängigen Ansprüche.

Gemäß einem ersten Aspekt der Erfindung weist eine Vorrichtung zum Versorgen hochautomatisierter oder autonomer Fortbewegungsmittel auf:
- eine Aufnahme, die eingerichtet ist, zumindest ein hochautomatisiertes oder autonomes Fortbewegungsmittel aufzunehmen;
- eine Kommunikationseinheit, die eingerichtet ist, Daten mit dem hochautomatisierten oder autonomen Fortbewegungsmittel und mit einem Backend eines Flottenbetreibers oder eines Betreibers der Vorrichtung auszutauschen, wobei die mit dem hochautomatisierten oder autonomen Fortbewegungsmittel ausgetauschten Daten Daten für eine Positionierung des hochautomatisierten oder autonomen Fortbewegungsmittels in der Vorrichtung umfassen; und
- zumindest eine automatisierte Serviceeinheit, die eingerichtet ist, Servicemaßnahmen für das hochautomatisierte oder autonome Fortbewegungsmittel durchzuführen;
wobei die zumindest eine automatisierte Serviceeinheit ein ortsfestes Waschportal ist und die Daten für die Positionierung das hochautomatisierte oder autonome Fortbewegungsmittel veranlassen, sich autonom vorwärts und rückwärts durch das Waschportal zu bewegen.

Gemäß einem weiteren Aspekt der Erfindung umfasst ein Computer-implementiertes Verfahren zum Betreiben einer erfindungsgemäßen Vorrichtung die Schritte:
- Übermitteln von Daten für eine Positionierung an ein hochautomatisiertes oder autonomes Fortbewegungsmittel;
- Empfangen von Daten zu durchzuführenden Servicemaßnahmen;
- Durchführen der Servicemaßnahmen; und
- Übermitteln von Daten für eine Abrechnung der durchgeführten Servicemaßnahmen an ein Backend oder an das hochautomatisierte oder autonome Fortbewegungsmittel;
wobei die zumindest eine automatisierte Serviceeinheit ein ortsfestes Waschportal ist und die Daten für die Positionierung das hochautomatisierte oder autonome Fortbewegungsmittel veranlassen, sich autonom vorwärts und rückwärts durch das Waschportal zu bewegen.

Gemäß einem weiteren Aspekt der Erfindung enthält ein computerlesbares Speichermedium Instruktionen, die bei Ausführung durch einen Computer den Computer zur Ausführung der folgende Schritte zum Betreiben einer erfindungsgemäßen Vorrichtung veranlassen:
- Übermitteln von Daten für eine Positionierung an ein hochautomatisiertes oder autonomes Fortbewegungsmittel;
- Empfangen von Daten zu durchzuführenden Servicemaßnahmen;
- Durchführen der Servicemaßnahmen; und
- Übermitteln von Daten für eine Abrechnung der durchgeführten Servicemaßnahmen an ein Backend oder an das hochautomatisierte oder autonome Fortbewegungsmittel;
wobei die zumindest eine automatisierte Serviceeinheit ein ortsfestes Waschportal ist und die Daten für die Positionierung das hochautomatisierte oder autonome Fortbewegungsmittel veranlassen, sich autonom vorwärts und rückwärts durch das Waschportal zu bewegen.

Der Begriff Computer ist dabei breit zu verstehen. Insbesondere umfasst er auch Workstations, verteilte Systeme und andere prozessorbasierte Datenverarbeitungsvorrichtungen.

Gemäß einem weiteren Aspekt der Erfindung weist eine Vorrichtung zum Betreiben einer erfindungsgemäßen Vorrichtung auf:
- eine Recheneinheit, die eingerichtet ist, Daten für eine Positionierung eines hochautomatisierten oder autonomen Fortbewegungsmittels zu ermitteln, Daten zu durchzuführenden Servicemaßnahmen auszuwerten und Daten für eine Abrechnung der durchgeführten Servicemaßnahmen zu ermitteln;
- eine Schnittstelle, die eingerichtet ist, die Daten für die Positionierung an das hochautomatisierte oder autonome Fortbewegungsmittel zu übermitteln, die Daten zu den durchzuführenden Servicemaßnahmen zu empfangen und die Daten für die Abrechnung der durchgeführten Servicemaßnahmen an ein Backend oder an das hochautomatisierte oder autonome Fortbewegungsmittel zu übermitteln; und
- eine Steuerungseinheit, die eingerichtet ist, die Durchführung der Servicemaßnahmen zu veranlassen;
wobei die zumindest eine automatisierte Serviceeinheit ein Waschportal ist und die Daten für die Positionierung das hochautomatisierte oder autonome Fortbewegungsmittel veranlassen, sich autonom vorwärts und rückwärts durch das Waschportal zu bewegen.

Erfindungsgemäß werden verschiedene Serviceleistungen hochautomatisiert und vollintegriert in einer einzigen Vorrichtung angeboten. Die Servicevorrichtungen sind die zentralen Anlaufpunkte für alle Servicemaßnahmen, die an den hochautomatisierten oder autonomen Fortbewegungsmitteln durchgeführt werden müssen. Die Parallelisierung bzw. Bündelung der Serviceleistungen an einem Ort führt zu einer Zeitersparnis, wodurch die Fortbewegungsmittel schneller wieder verfügbar sind und sich besser disponieren lassen. Das integrierte System benötigt zudem weniger Platz und Personal als getrennte Einrichtungen, was wiederum zu einer Kostenersparnis führt. Die erfindungsgemäße Vorrichtung ist insbesondere für Flottenbetreiber vorteilhaft, da keine eigene Infrastruktur benötigt wird. Diese wird vielmehr zentral bereitgestellt. Der Flottenbetreiber hat somit eine größere Flexibilität. Dabei kann die Vorrichtung mit der Flottenverwaltung des Flottenbetreibers vernetzt sein. Auf diese Weise lässt sich eine optimale räumliche oder zeitliche Verteilung der diversen Fortbewegungsmittel eines Flottenbetreibers auf verschiedene Versorgungsvorrichtungen realisieren.

Auch für Privatkunden ist die beschriebene Lösung vorteilhaft. Beispielsweise kann das betroffene Fortbewegungsmittel nachts selbständig die Vorrichtung aufsuchen. Es steht dann am nächsten Morgen nach Abschluss der Serviceleistungen wieder beim Kunden zur Verfügung.

Der Austausch von Daten für die Positionierung vereinfacht dabei die exakte Positionierung des Fortbewegungsmittels in der Vorrichtung, da eine an die spezielle Aufgabe angepasste Sensorik vorgesehen sein kann, deren Fähigkeiten über die der im Fortbewegungsmittel vorhandenen Sensorik hinausgehen. Bei den Daten für die Positionierung kann es sich einerseits um grobe Positionsangaben handeln, beispielsweise lediglich um eine Angabe, welche von mehreren vorhandenen Aufnahmen aufgesucht werden soll. Andererseits können auch exakte absolute oder relative Positionsangaben oder Anweisungen für erforderliche Bewegungsmanöver übermittelt werden.

Vorzugsweise ist der Hersteller der Anlage gleichzeitig der Betreiber. Allerdings ist es ebenso möglich, dass die Anlage durch einen Flottenbetreiber oder auch durch einen Hersteller von Fortbewegungsmitteln betrieben wird.

Als Servicemaßnahmen können beispielsweise eine oder mehrere der folgenden Maßnahmen realisiert werden: Versorgung des hochautomatisierten oder autonomen Fortbewegungsmittels mit Energie oder Betriebsstoffen, Reinigung des hochautomatisierten oder autonomen Fortbewegungsmittels, Wartung oder Reparatur des hochautomatisierten oder autonomen Fortbewegungsmittels, Änderung einer Konfiguration des hochautomatisierten oder autonomen Fortbewegungsmittels, Durchführung einer Kontrolle des hochautomatisierten oder autonomen Fortbewegungsmittels, und Versorgung des hochautomatisierten oder autonomen Fortbewegungsmittels mit Verbrauchsmaterial oder temporär im Fortbewegungsmittel verbleibendem Material.

Gemäß einem Aspekt der Erfindung ist die Kommunikationseinheit eingerichtet, mit dem hochautomatisierten oder autonomen Fortbewegungsmittel Daten zu durchzuführenden Servicemaßnahmen auszutauschen.

Durch den Austausch von Daten zu durchzuführenden Servicemaßnahmen kann auf einfache Weise ermittelt werden, welche Servicemaßnahmen in der Vorrichtung erfolgen sollen. Dabei kann das Fortbewegungsmittel beispielsweise eindeutige Vorgaben machen, dass eine Servicemaßnahme durchgeführt werden soll, es können aber auch lediglich Daten bereitgestellt werden, anhand derer die Vorrichtung eigenständig bestimmt, welche Servicemaßnahmen durchgeführt werden sollen. Auch Mischformen beider Ansätze können realisiert sein. Die Vorrichtung kann zusätzlich auch auf eine eigene Sensorik zurückgreifen, um die durchzuführenden zwei oder mehr Serviceeinheiten zu ermitteln.

Gemäß einem Aspekt der Erfindung ist die Kommunikationseinheit eingerichtet, mit dem Backend Daten zu durchzuführenden Servicemaßnahmen, Daten für eine Abrechnung von Servicemaßnahmen oder Daten für eine Nutzungsplanung der Vorrichtung auszutauschen.

Informationen über die durchzuführenden Servicemaßnahmen kann die Vorrichtung auch direkt durch das Backend des Flottenbetreibers oder durch das Backend des Betreibers der Vorrichtung erhalten. In diesem Fall ist es nicht erforderlich, dass das Fortbewegungsmittel selbst diese Informationen bereitstellt. Dieser Ansatz ist insbesondere dann von Vorteil, wenn die Vorrichtung unmittelbar oder über das Backend des Betreibers mit der Flottenverwaltung des Flottenbetreibers vernetzt ist.

Ebenfalls können auf diesem Weg Abrechnungsdaten ausgetauscht werden, d.h. der Betreiber der Vorrichtung und der Flottenbetreiber sind stets vollständig über die generierten Umsätze bzw. die angefallenen Kosten informiert. Die Abrechnungsdaten können aber auch an das oder an das hochautomatisierte oder autonome Fortbewegungsmittel übermittelt werden. Für die Nutzung der Vorrichtung sind verschiedene Zahlungsmodelle umsetzbar. Beispielsweise kann eine Einmalzahlungen pro Nutzung vereinbart sein, besonders vorteilhaft ist aber die Vereinbarung von Serviceverträgen mit wöchentlicher, monatlicher oder jährlicher Abrechnung.

Der Austausch von Daten für eine Nutzungsplanung ist sowohl für den Flottenbetreiber als auch für den Betreiber der Vorrichtung vorteilhaft. So kann der Flottenbetreiber beispielsweise übermitteln, welche Servicemaßnahmen zu welchem Zeitpunkt für welche Fortbewegungsmittel benötigt werden, so dass der Betreiber die notwendigen Kapazitäten und Materialien einplanen kann. Umgekehrt kann der Flottenbetreiber informiert werden, wann welche Vorrichtung genutzt werden kann, ob eventuell einzelne Serviceeinheiten außer Betrieb sind, welcher Zeitaufwand erforderlich sein wird, etc. Durch den Informationsaustausch kann eine hohe Auslastung der Vorrichtung sowie eine effiziente Durchführung der Servicemaßnahmen und infolgedessen eine hohe Verfügbarkeit der Fortbewegungsmittel erreicht werden.

Gemäß einem Aspekt der Erfindung weist die Vorrichtung als zumindest eine weitere Serviceeinheit einen Serviceroboter auf. Zwar kann es in einzelnen Märkten auch sinnvoll sein, zumindest teilweise auf den Einsatz von Servicerobotern zu verzichten, durch den Einsatz von Servicerobotern lässt sich allerdings eine deutlich gesteigerte Bearbeitungsgeschwindigkeit erzielen. Zudem wird durch die Nutzung von Servicerobotern ein Einsatz der Vorrichtung rund um die Uhr ermöglicht.

Gemäß einem Aspekt der Erfindung wird durch Lichtschranken sichergestellt, dass sich keine Personen innerhalb der Vorrichtung befinden. Diese Maßnahme ermöglicht es, kostengünstige Serviceroboter zu verwenden, die nicht für die Interaktion mit Personen konzipiert sind.

Gemäß einem Aspekt der Erfindung ist die Vorrichtung modular aufgebaut. Auf diese Weise können mit geringem Aufwand neue Servicemaßnahmen angeboten, zusätzliche Serviceeinheiten bereitgestellt oder auch wenig gefragte Servicemaßnahmen eingestellt werden. Zudem können einzelne Module auf neueste Standards gebracht werden, beispielsweise für eine effizientere Nutzung von Ressourcen, ohne die ganze Vorrichtung stilllegen zu müssen. Das gleiche gilt für die Wartung oder Reparatur einzelner Serviceeinheiten.

Gemäß einem Aspekt der Erfindung ist die Vorrichtung an hochautomatisierte oder autonome Fortbewegungsmittel eines Herstellers angepasst. Insbesondere kann die Vorrichtung auch auf ein spezielles Fortbewegungsmittel oder eine Familie von Fortbewegungsmitteln angepasst sein. Dazu kann beispielsweise die Entwicklung der Vorrichtung synchron mit der Entwicklung der Fortbewegungsmittel erfolgen. Eine speziell auf Konzernprodukte abgestimmte Lösung gewährleistet eine hohe Servicequalität der Anlage. Zudem werden die Entwicklungskosten der Vorrichtung reduziert, da die Vorrichtung nicht mit den verschiedenen Gestaltungen der Fortbewegungsmittel unterschiedlicher Hersteller zurecht kommen muss.

Gemäß einem Aspekt der Erfindung ist das Fortbewegungsmittel ein Kraftfahrzeug, ein Wasserfahrzeug oder ein Luftfahrzeug. Besonders vorteilhaft ist die erfindungsgemäße Lösung in Verbindung mit Kraftfahrzeugen, die eine hohe Verbreitung und einen verhältnismäßig großen Serviceaufwand haben. Daneben lässt sich das Konzept auch nutzen für Boote, Drohnen, Flugzeuge und Hubschrauber, insbesondere persönliche Luftfahrzeuge, sowie Mikromobilitätskonzepte, die Kleinstfahrzeuge und selbstfahrende Plattformen verwenden.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch eine Vorrichtung zum Versorgen hochautomatisierter oder autonomer Fortbewegungsmittel;
- Fig. 2: zeigt schematisch ein Verfahren zum Betreiben einer Vorrichtung zum Versorgen hochautomatisierter oder autonomer Fortbewegungsmittel;
- Fig. 3: zeigt eine erste Ausführungsform einer Vorrichtung zum Betreiben einer Vorrichtung zum Versorgen hochautomatisierter oder autonomer Fortbewegungsmittel;
- Fig. 4: zeigt eine zweite Ausführungsform einer Vorrichtung zum Betreiben einer Vorrichtung zum Versorgen hochautomatisierter oder autonomer Fortbewegungsmittel;
- Fig. 5: zeigt schematisch eine bevorzugte Ausführungsform einer Vorrichtung zum Versorgen hochautomatisierter oder autonomer Kraftfahrzeuge;
- Fig. 6: zeigt schematisch das Laden und Reinigen eines Kraftfahrzeugs;
- Fig. 7: zeigt schematisch das Ändern der Konfiguration und das Wechseln eines Rades des Kraftfahrzeugs; und
- Fig. 8: zeigt schematisch die Reparatur der Frontscheibe des Kraftfahrzeugs.

Zum besseren Verständnis der Prinzipien der vorliegenden Erfindung werden nachfolgend Ausführungsformen der Erfindung anhand der Figuren am Beispiel eines Kraftfahrzeugs als Fortbewegungsmittel detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

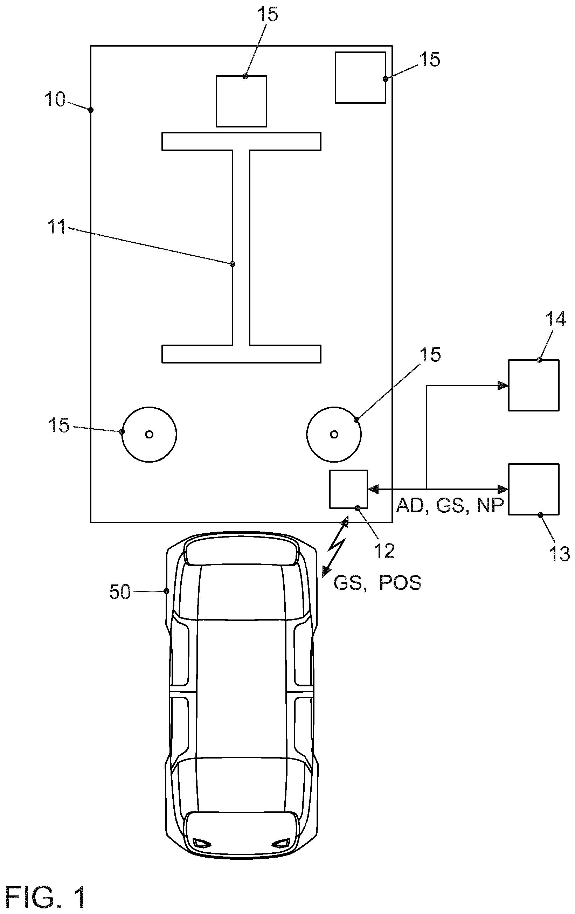

Fig. 1 zeigt schematisch eine Vorrichtung 10 zum Versorgen hochautomatisierter oder autonomer Fortbewegungsmittel 50. In diesem Beispiel handelt es sich bei dem hochautomatisierten oder autonomen Fortbewegungsmittel 50 um ein Kraftfahrzeug. Die Vorrichtung 10 hat eine Aufnahme 11 für zumindest ein hochautomatisiertes oder autonomes Fortbewegungsmittel 50. Die Aufnahme 11 kann beispielsweise eine Arbeitsbühne sein, so wie in Fig. 1 angedeutet. Die Aufnahme 11 kann aber auch anders gestaltet sein, z.B. als Rollenprüfstand oder lediglich als einfache Standfläche, gegebenenfalls mit Markierungen für die Positionierung des Fortbewegungsmittels 50. Die Vorrichtung 10 weist eine Kommunikationseinheit 12 auf, die zum Austausch von Daten AD, GS, NP, POS mit dem hochautomatisierten oder autonomen Fortbewegungsmittel 50 und mit einem Backend 13 eines Flottenbetreibers oder einem Backend 14 eines Betreibers der Vorrichtung 10 dient. Insbesondere kann die Kommunikationseinheit 12 mit dem hochautomatisierten oder autonomen Fortbewegungsmittel 50 Daten POS für eine Positionierung des hochautomatisierten oder autonomen Fortbewegungsmittels 50 in der Vorrichtung 10 oder Daten GS zu durchzuführenden Servicemaßnahmen austauschen. Der Datenaustausch mit dem Backend 13 des Flottenbetreibers oder dem Backend 14 des Betreibers der Vorrichtung 10 kann Daten GS zu durchzuführenden Servicemaßnahmen, Daten AD für eine Abrechnung von Servicemaßnahmen oder Daten NP für eine Nutzungsplanung der Vorrichtung 10 umfassen. Weiterhin weist die Vorrichtung 10 zumindest eine Serviceeinheit 15 für die Durchführung von Servicemaßnahmen für das hochautomatisierte oder autonome Fortbewegungsmittel 50 auf. Im Beispiel in Fig. 1 sind dies Serviceeinheiten 15 für eine Außenreinigung im Einfahrbereich der Vorrichtung 10, eine am Ende der Aufnahme 11 angeordnete Serviceeinheit 15 für eine Betankung oder einen Ladevorgang sowie eine weitere Serviceeinheit 15 zur Durchführung von Wartungsarbeiten. Natürlich können auch andere oder weitere Serviceeinheiten 15 vorgesehen sein, beispielsweise für die Innenreinigung, Reparaturen, die Änderung der Konfiguration, Kontrollen oder die Versorgung mit Verbrauchsmaterial oder temporär im Fortbewegungsmittel verbleibendem Material. Für eine Vereinfachung der Wartung oder Anpassung der Vorrichtung 10 kann diese modular ausgeführt sein. Vorzugsweise werden die Serviceeinheiten 15 in Form von Servicerobotern bereitgehalten. Dabei kann durch Lichtschranken sichergestellt werden, dass sich keine Personen innerhalb der Vorrichtung 10 befinden.

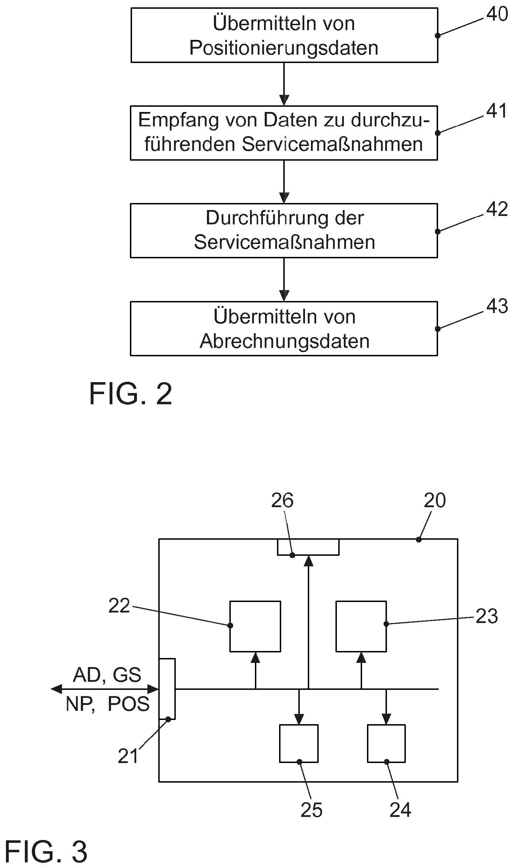

Fig. 2 zeigt schematisch ein Verfahren zum Betreiben einer Vorrichtung zum Versorgen hochautomatisierter oder autonomer Fortbewegungsmittel. In einem ersten Schritt 40 werden Daten für eine Positionierung an ein hochautomatisiertes oder autonomes Fortbewegungsmittel übermittelt. Zusätzlich werden Daten zu durchzuführenden Servicemaßnahmen empfangen. Diese können direkt vom Fortbewegungsmittel bereitgestellt werden. Sie können aber auch durch ein Backend 13 eines Flottenbetreibers oder ein Backend 14 eines Betreibers der Vorrichtung 10 zur Verfügung gestellt werden. Nach der korrekten Positionierung des Fortbewegungsmittels werden die ermittelten Servicemaßnahmen durchgeführt 42. Abschließend werden Daten für eine Abrechnung der durchgeführten Servicemaßnahmen an das Backend des Flottenbetreibers, das Backend des Betreibers der Vorrichtung oder an das Fortbewegungsmittel übermittelt 43.

Fig. 3 zeigt eine vereinfachte schematische Darstellung einer ersten Ausführungsform einer Vorrichtung 20 zum Betreiben einer Vorrichtung zum Versorgen hochautomatisierter oder autonomer Fortbewegungsmittel. Die Vorrichtung 20 hat eine Recheneinheit 22, die Daten POS für eine Positionierung eines hochautomatisierten oder autonomen Fortbewegungsmittels ermittelt, Daten GS zu durchzuführenden Servicemaßnahmen auswertet und Daten AD für eine Abrechnung der durchgeführten Servicemaßnahmen ermittelt. Die Daten POS für die Positionierung werden über eine Schnittstelle 21 an das hochautomatisierte oder autonome Fortbewegungsmittel übermittelt. Über die Schnittstelle 21 werden zudem die Daten GS zu den durchzuführenden Servicemaßnahmen empfangen und die Daten AD für die Abrechnung der durchgeführten Servicemaßnahmen an ein Backend oder an das hochautomatisierte oder autonome Fortbewegungsmittel übermittelt. Mit dem Backend können zudem Daten NP für eine Nutzungsplanung der Vorrichtung ausgetauscht werden. Durch eine Steuerungseinheit 23 wird auf Grundlage der ermittelten Servicemaßnahmen die Durchführung der Servicemaßnahmen veranlasst.

Die Recheneinheit 22 und die Steuerungseinheit 23 können von einer Kontrolleinheit 24 gesteuert werden. Über eine Benutzerschnittstelle 26 können gegebenenfalls Einstellungen der Recheneinheit 22, der Steuerungseinheit 23 oder der Kontrolleinheit 24 geändert werden. Die in der Vorrichtung 20 anfallenden Daten können bei Bedarf in einem Speicher 25 der Vorrichtung 20 abgelegt werden, beispielsweise für eine spätere Auswertung oder für eine Nutzung durch die Komponenten der Vorrichtung 20. Die Recheneinheit 22, die Steuerungseinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU.

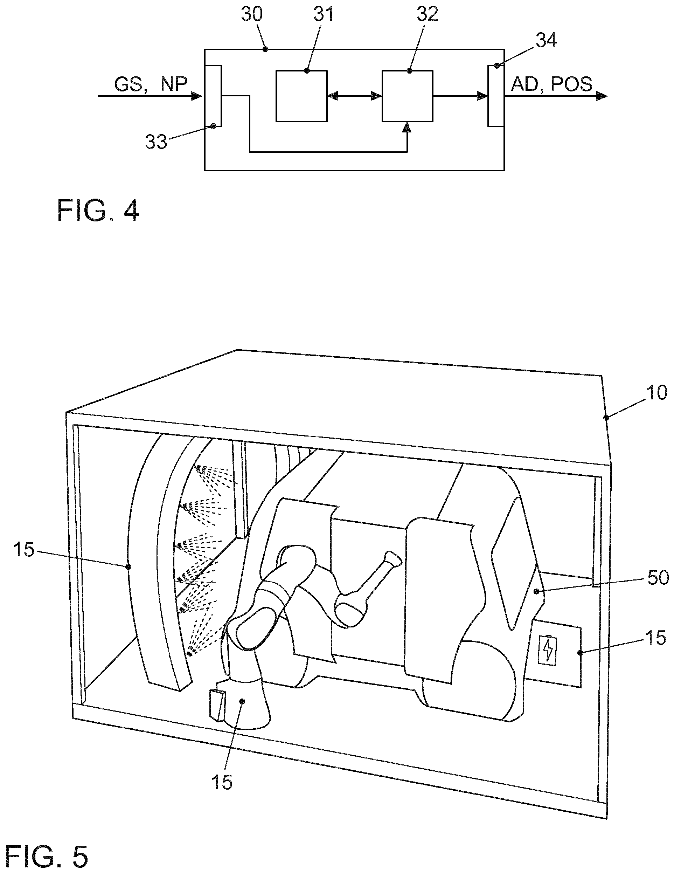

Fig. 4 zeigt eine vereinfachte schematische Darstellung einer zweiten Ausführungsform einer Vorrichtung 30 zum Betreiben einer Vorrichtung zum Versorgen hochautomatisierter oder autonomer Fortbewegungsmittel. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Daten GS zu durchzuführenden Servicemaßnahmen. Vom Prozessor 32 generierte Daten, insbesondere Daten POS für eine Positionierung des Fortbewegungsmittels und Daten AD für eine Abrechnung der durchgeführten Servicemaßnahmen, werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Nachfolgend soll eine bevorzugte Ausführungsform der Erfindung anhand der Figuren 5 bis 8 detaillierter beschrieben werden.

Fig. 5 zeigt schematisch eine Vorrichtung 10 zum Versorgen hochautomatisierter oder autonomer Kraftfahrzeuge 50. Die Vorrichtung 10 ist als Stand-alone-Lösung konzipiert und umfasst in diesem Beispiel drei Serviceeinheiten 15. Eine erste Serviceeinheit 15 ermöglicht eine Außenreinigung des Kraftfahrzeugs 50. Durch eine zweite Serviceeinheit 15, die als Serviceroboter ausgeführt ist, kann der Innenraum des Kraftfahrzeugs 50 gereinigt werden. Mit Hilfe eines Gerätewechsels kann diese Serviceeinheit 15 gegebenenfalls auch weitere Servicemaßnahmen durchführen, beispielweise eine Änderung der Konfiguration oder die Versorgung mit Verbrauchsmaterial oder temporär im Fortbewegungsmittel verbleibendem Material. Eine dritte Serviceeinheit 15 dient zum Laden des Kraftfahrzeugs 50. Hierbei wird vorzugsweise eine hohe Ladeleistung bereitgestellt, um eine kurze Ladedauer zu realisieren. Durch die Nutzung von Strom aus regenerativen Quellen und umweltfreundliche Reinigungsverfahren kann seitens der Vorrichtung 10 eine hohe Nachhaltigkeit erreicht werden.

Welche Servicemaßnahmen ausgeführt werden sollen, kann beispielsweise durch einen Austausch von Daten mit einem Backend eine Flottenbetreibers oder eines Betreibers der Vorrichtung 10 ermittelt werden. Dabei können konkrete Servicemaßnahmen beauftragt werden oder eine Anweisung erfolgen, notwendige oder sinnvolle Servicemaßnahmen seitens der Vorrichtung 10 feststellen zu lassen. Alternativ kann auch das Kraftfahrzeug 50 Informationen über durchzuführende Servicemaßnahmen bereitstellen. Dies kann wiederum in der Form erfolgen, dass konkrete Servicemaßnahmen vom Kraftfahrzeug 50 beauftragt werden. Ebenso kann ein Zugriff auf Fahrzeugdaten gewährt werden, beispielsweise auf Daten aus dem Fehlerspeicher, Informationen zum Ladestand oder zur Laufleistung, etc., aus denen die Vorrichtung 10 anschließend die durchzuführenden Servicemaßnahmen ermittelt. Schließlich kann die Vorrichtung 10 die durchzuführenden Servicemaßnahmen auch durch eine eigene Sensorik ermitteln, indem z.B. durch optische Sensoren eine Verschmutzung des Kraftfahrzeugs 50 oder eventuelle Schäden erfasst werden.

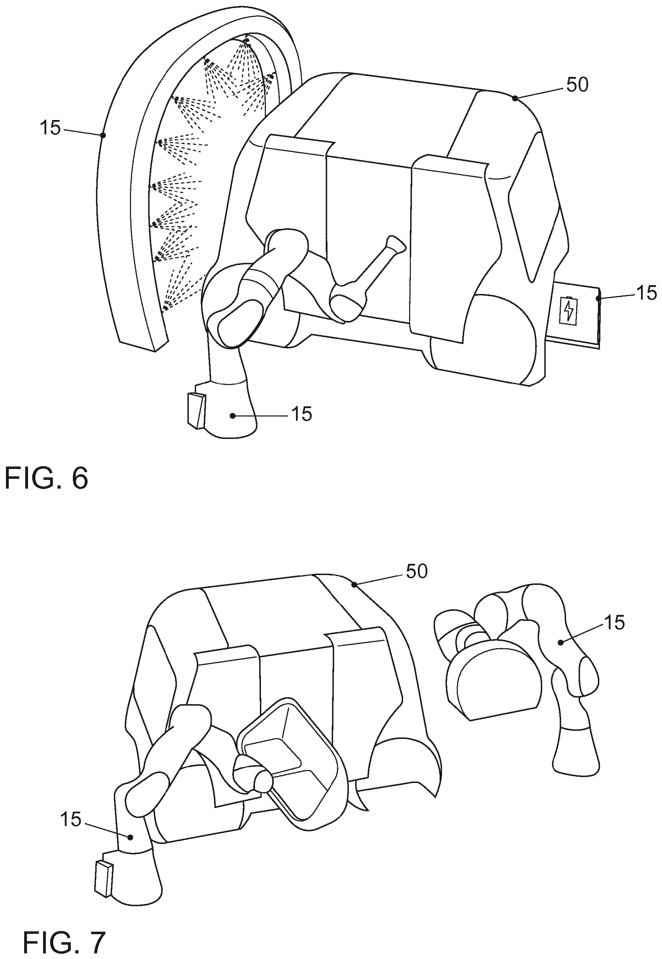

Fig. 6 zeigt schematisch ein Modul zum Laden und zum Reinigen eines Kraftfahrzeugs, das in einer Vorrichtung 10 zum Versorgen hochautomatisierter oder autonomer Kraftfahrzeuge 50 eingesetzt werden kann. Wie schon mit Bezug auf Fig. 5 beschrieben sind drei Serviceeinheiten 15 vorgesehen. Die erste Serviceeinheit 15 ermöglicht eine Außenreinigung des Kraftfahrzeugs 50. Die als Serviceroboter ausgeführte zweite Serviceeinheit 15 dient der Reinigung des Innenraums des Kraftfahrzeugs 50 und die dritte Serviceeinheit 15 führt einen Ladevorgang aus. Reinigung und Laden des Kraftfahrzeugs 50 können je nach Bedarf einmal oder auch mehrfach am Tag durchgeführt werden. Für die Außenreinigung des Kraftfahrzeugs 50 ist vorgesehen, dass sich nicht die erste Serviceeinheit 15, d.h. das Waschportal, relativ zum Kraftfahrzeug 50 bewegt, sondern sich das Kraftfahrzeug 50 autonom vorwärts und rückwärts durch das Waschportal bewegt. Auf diese Weise wird die für das Waschportal erforderliche Technik deutlich reduziert, da es ortsfest steht und für die Relativbewegung stattdessen die im Kraftfahrzeug 50 vorhandene Technik genutzt wird.

Fig. 7 zeigt schematisch ein Modul zum Ändern der Konfiguration des Kraftfahrzeugs 50 und zum Durchführen einer Servicearbeit, das in einer Vorrichtung 10 zum Versorgen hochautomatisierter oder autonomer Kraftfahrzeuge 50 eingesetzt werden kann. Eine erste als Serviceroboter ausgeführte Serviceeinheit 15 ermöglicht es, die Konfiguration des Kraftfahrzeugs 50 zu ändern, beispielsweise durch den Ein- oder Ausbau von Sitzen in Abhängigkeit von der anstehenden Nutzung zum Personen- oder Gütertransport. Daneben kann diese Serviceeinheit 15 auch die Versorgung mit Verbrauchsmaterial durchführen. Beispiele für Verbrauchsmaterialien sind Snacks, Getränke, Zeitschriften, Pflege- oder Taschentücher, Desinfektionsmittel etc. Ebenso kann temporär im Kraftfahrzeug verbleibendes Material bereitgestellt oder entfernt werden, beispielsweise Kindersitze oder Sitzerhöhungen. Eine zweite als Serviceroboter ausgeführte Serviceeinheit 15 ermöglicht es, Servicearbeiten gemäß einem Serviceplan durchzuführen. Im Beispiel in Fig. 7 steht als Servicemaßnahme ein Radwechsel an. Umbau, Auffüllung mit Verbrauchmaterial und Service werden bedarfsweise durchgeführt, z.B. mehrmals pro Woche oder Monat.

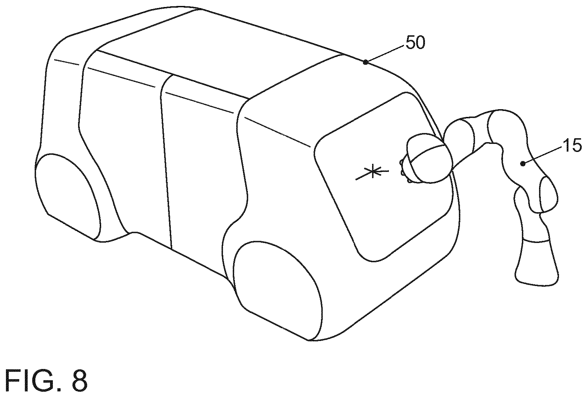

Fig. 8 zeigt schematisch ein Modul zur Reparatur des Kraftfahrzeugs 50, das in einer Vorrichtung 10 zum Versorgen hochautomatisierter oder autonomer Kraftfahrzeuge 50 eingesetzt werden kann. Eine als Serviceroboter ausgeführte Serviceeinheit 15 ermöglicht die Reparatur insbesondere kleinerer Beschädigungen, wie Kratzer im Lack oder Steinschlagschäden in den Scheiben. Im Beispiel in Fig. 8 wird ein Schaden in der Frontscheibe des Kraftfahrzeugs 50 beseitigt. Die Reparaturen werden bedarfsweise durchgeführt. Da für diese Art von Servicemaßnahmen gegebenenfalls Ersatzteile vorgehalten werden müssen und eine komplexere Robotik erforderlich sein kann, ist es sinnvoll, wenn sie nur in ausgewählten Servicevorrichtungen angeboten werden.

### Bezugszeichenliste

- 10: Vorrichtung zum Versorgen autonomer Fortbewegungsmittel
- 11: Aufnahme
- 12: Kommunikationseinheit
- 13: Backend eines Flottenbetreibers
- 14: Backend eines Betreibers der Vorrichtung
- 15: Serviceeinheit
- 20: Vorrichtung
- 21: Schnittstelle
- 22: Recheneinheit
- 23: Steuerungseinheit
- 24: Kontrolleinheit
- 25: Speicher
- 26: Benutzerschnittstelle
- 30: Vorrichtung
- 31: Speicher
- 32: Prozessor
- 33: Eingang
- 34: Ausgang
- 40: Übermitteln von Positionierungsdaten
- 41: Empfangen von Daten zu durchzuführenden Servicemaßnahmen
- 42: Durchführen der Servicemaßnahmen
- 43: Übermitteln von Abrechnungsdaten
- 50: Fortbewegungsmittel
- AD: Daten für eine Abrechnung von Servicemaßnahmen
- GS: Daten zu durchzuführenden Servicemaßnahmen
- NP: Daten für Nutzungsplanung
- POS: Daten für die Positionierung

## Patentansprüche

1. Vorrichtung (10) zum Versorgen hochautomatisierter oder autonomer Fortbewegungsmittel (50), mit:
- einer Aufnahme (11), die eingerichtet ist, zumindest ein hochautomatisiertes oder autonomes Fortbewegungsmittel (50) aufzunehmen;
- einer Kommunikationseinheit (12), die eingerichtet ist, Daten (AD, GS, NP, POS) mit dem hochautomatisierten oder autonomen Fortbewegungsmittel (50) und mit einem Backend (13, 14) eines Flottenbetreibers oder eines Betreibers der Vorrichtung (10) auszutauschen, wobei die mit dem hochautomatisierten oder autonomen Fortbewegungsmittel (50) ausgetauschten Daten (GS, POS) Daten (POS) für eine Positionierung des hochautomatisierten oder autonomen Fortbewegungsmittels (50) in der Vorrichtung (10) umfassen; und
- zumindest einer automatisierten Serviceeinheit (15), die eingerichtet ist, Servicemaßnahmen für das hochautomatisierte oder autonome Fortbewegungsmittel (50) durchzuführen;
**dadurch gekennzeichnet, dass** die zumindest eine automatisierte Serviceeinheit (15) ein ortsfestes Waschportal ist und die Daten (POS) für die Positionierung das hochautomatisierte oder autonome Fortbewegungsmittel (50) veranlassen, sich autonom vorwärts und rückwärts durch das Waschportal zu bewegen.

2. Vorrichtung (10) gemäß Anspruch 1, wobei die Kommunikationseinheit (12) eingerichtet ist, mit dem hochautomatisierten oder autonomen Fortbewegungsmittel (50) Daten (GS) zu durchzuführenden Servicemaßnahmen auszutauschen.

3. Vorrichtung (10) gemäß Anspruch 1 oder 2, wobei die Kommunikationseinheit (12) eingerichtet ist, mit dem Backend (13, 14) Daten (GS) zu durchzuführenden Servicemaßnahmen, Daten (AD) für eine Abrechnung von Servicemaßnahmen oder Daten (NP) für eine Nutzungsplanung der Vorrichtung (10) auszutauschen.

4. Vorrichtung (10) gemäß einem der vorherigen Ansprüche, wobei die Servicemaßnahmen eine oder mehrere der folgenden Maßnahmen umfassen: Versorgung des hochautomatisierten oder autonomen Fortbewegungsmittels (50) mit Energie oder Betriebsstoffen, Reinigung des hochautomatisierten oder autonomen Fortbewegungsmittels (50), Wartung oder Reparatur des hochautomatisierten oder autonomen Fortbewegungsmittels (50), Änderung einer Konfiguration des hochautomatisierten oder autonomen Fortbewegungsmittels (50), Durchführung einer Kontrolle des hochautomatisierten oder autonomen Fortbewegungsmittels (50), und Versorgung des hochautomatisierten oder autonomen Fortbewegungsmittels (50) mit Verbrauchsmaterial oder temporär im Fortbewegungsmittel verbleibendem Material.

5. Vorrichtung (10) gemäß einem der vorherigen Ansprüche, wobei die Vorrichtung (10) als zumindest eine weitere Serviceeinheit (15) einen Serviceroboter aufweist.

6. Vorrichtung (10) gemäß einem der vorherigen Ansprüche, wobei durch Lichtschranken sichergestellt wird, dass sich keine Personen innerhalb der Vorrichtung (10) befinden.

7. Vorrichtung (10) gemäß einem der vorherigen Ansprüche, wobei die Vorrichtung (10) modular aufgebaut ist.

8. Computer-implementiertes Verfahren zum Betreiben einer Vorrichtung (10) gemäß einem der Ansprüche 1 bis 7 zum Versorgen hochautomatisierter oder autonomer Fortbewegungsmittel (50), mit den Schritten:
- Übermitteln (40) von Daten (POS) für eine Positionierung an ein hochautomatisiertes oder autonomes Fortbewegungsmittel (50);
- Empfangen (41) von Daten (GS) zu durchzuführenden Servicemaßnahmen;
- Durchführen (42) der Servicemaßnahmen; und
- Übermitteln (43) von Daten (AD) für eine Abrechnung der durchgeführten Servicemaßnahmen an ein Backend (13, 14) oder an das hochautomatisierte oder autonome Fortbewegungsmittel (50);
**dadurch gekennzeichnet, dass** die zumindest eine automatisierte Serviceeinheit (15) ein ortsfestes Waschportal ist und die Daten (POS) für die Positionierung das hochautomatisierte oder autonome Fortbewegungsmittel (50) veranlassen, sich autonom vorwärts und rückwärts durch das Waschportal zu bewegen.

9. Verfahren gemäß Anspruch 8, wobei Daten (NP) für eine Nutzungsplanung der Vorrichtung (10) mit dem Backend (13, 14) ausgetauscht werden.

10. Vorrichtung (20) zum Betreiben einer Vorrichtung (10) gemäß einem der Ansprüche 1 bis 7 zum Versorgen hochautomatisierter oder autonomer Fortbewegungsmittel (50), mit
- einer Recheneinheit (22), die eingerichtet ist, Daten (POS) für eine Positionierung eines hochautomatisierten oder autonomen Fortbewegungsmittels (50) zu ermitteln, Daten (GS) zu durchzuführenden Servicemaßnahmen auszuwerten und Daten (AD) für eine Abrechnung der durchgeführten Servicemaßnahmen zu ermitteln;
- einer Schnittstelle (21), die eingerichtet ist, die Daten (POS) für die Positionierung an das hochautomatisierte oder autonome Fortbewegungsmittel (50) zu übermitteln (40), die Daten (GS) zu den durchzuführenden Servicemaßnahmen zu empfangen (41) und die Daten (AD) für die Abrechnung der durchgeführten Servicemaßnahmen an ein Backend (13, 14) oder an das hochautomatisierte oder autonome Fortbewegungsmittel (50) zu übermitteln (43); und
- einer Steuerungseinheit (23), die eingerichtet ist, die Durchführung (42) der Servicemaßnahmen zu veranlassen;
**dadurch gekennzeichnet, dass** die zumindest eine automatisierte Serviceeinheit (15) ein ortsfestes Waschportal ist und die Daten (POS) für die Positionierung das hochautomatisierte oder autonome Fortbewegungsmittel (50) veranlassen, sich autonom vorwärts und rückwärts durch das Waschportal zu bewegen.

## Claims

1. Device (10) for servicing highly automated or autonomous transport means (50), comprising:
- a mount (11) configured to receive at least one highly automated or autonomous transport means (50);
- a communication unit (12) configured to exchange data (AD, GS, NP, POS) with the highly automated or autonomous transport means (50) and with a backend (13, 14) of a fleet operator or an operator of the device (10), the data (GS, POS) exchanged with the highly automated or autonomous transport means (50) comprising data (POS) for positioning the highly automated or autonomous transport means (50) in the device (10); and
- at least one automated service unit (15) configured to perform service measures for the highly automated or autonomous transport means (50);
**characterized in that** the at least one automated service unit (15) is a stationary washing portal and the data (POS) for the positioning cause the highly automated or autonomous transport means (50) to move autonomously forward and backward through the washing portal.

2. Device (10) according to claim 1, wherein the communication unit (12) is configured to exchange, with the highly automated or autonomous transport means (50), data (GS) regarding service measures to be performed.

3. Device (10) according to claim 1 or 2, wherein the communication unit (12) is configured to exchange, with the backend (13, 14), data (GS) regarding service measures to be performed, data (AD) for billing service measures, or data (NP) for usage planning of the device (10).

4. Device (10) according to any of the preceding claims, wherein the service measures comprise one or more of the following measures: supplying the highly automated or autonomous transport means (50) with energy or operating materials, cleaning the highly automated or autonomous transport means (50), performing maintenance on or repairing the highly automated or autonomous transport means (50), changing a configuration of the highly automated or autonomous transport means (50), performing an inspection of the highly automated or autonomous transport means (50), and supplying the highly automated or autonomous transport means (50) with consumables or material temporarily remaining in the transport means.

5. Device (10) according to any of the preceding claims, wherein the device (10) has a service robot as at least one further service unit (15).

6. Device (10) according to any of the preceding claims, wherein light barriers ensure that no persons are inside the device (10).

7. Device (10) according to any of the preceding claims, wherein the device (10) is modular in design.

8. Computer-implemented method for operating a device (10) according to any of claims 1 to 7 for servicing highly automated or autonomous transport means (50), comprising the steps of:
- transmitting (40) data (POS) for positioning to a highly automated or autonomous transport means (50);
- receiving (41) data (GS) regarding service measures to be performed;
- performing (42) the service measures; and
- transmitting (43) data (AD) for billing the performed service measures to a backend (13, 14) or to the highly automated or autonomous transport means (50);
**characterized in that** the at least one automated service unit (15) is a stationary washing portal and the data (POS) for the positioning cause the highly automated or autonomous transport means (50) to move autonomously forward and backward through the washing portal.

9. Method according to claim 8, wherein data (NP) for usage planning of the device (10) are exchanged with the backend (13, 14).

10. Device (20) for operating a device (10) according to any of claims 1 to 7 for servicing highly automated or autonomous transport means (50), comprising
- a computing unit (22) configured to ascertain data (POS) for positioning a highly automated or autonomous transport means (50), to evaluate data (GS) regarding service measures to be performed, and to ascertain data (AD) for billing the performed service measures;
- an interface (21) configured to transmit (40) the data (POS) for the positioning to the highly automated or autonomous transport means (50), to receive (41) the data (GS) regarding the service measures to be performed, and to transmit (43) the data (AD) for the billing of the performed service measures to a backend (13, 14) or to the highly automated or autonomous transport means (50); and
- a control unit (23) configured to cause the service measures to be performed (42);
**characterized in that** the at least one automated service unit (15) is a stationary washing portal and the data (POS) for the positioning cause the highly automated or autonomous transport means (50) to move autonomously forward and backward through the washing portal.

## Revendications

1. Dispositif (10) pour la fourniture de moyens de locomotion (50) hautement automatisés ou autonomes, comportant :
- un réceptacle (11) conçu pour recevoir au moins un moyen de locomotion (50) hautement automatisé ou autonome ;
- une unité de communication (12) configurée pour échanger des données (AD, GS, NP, POS) avec le moyen de locomotion (50) hautement automatisé ou autonome et avec un système dorsal (13, 14) d'un opérateur de flotte ou d'un opérateur du dispositif (10), dans lequel les données (GS, POS) échangées avec le moyen de locomotion (50) hautement automatisé ou autonome comprennent des données (POS) pour un positionnement dudit moyen de locomotion (50) hautement automatisé ou autonome dans le dispositif (10) ; et
- au moins une unité de service (15) automatisée configurée pour effectuer des mesures de service pour le moyen de locomotion (50) hautement automatisé ou autonome ;
**caractérisé en ce que** l'au moins une unité de service (15) automatisée est un portique de lavage stationnaire et les données (POS) pour le positionnement amènent le moyen de locomotion (50) hautement automatisé ou autonome à se déplacer de manière autonome vers l'avant et vers l'arrière à travers le portique de lavage.

2. Dispositif (10) selon la revendication 1, dans lequel l'unité de communication (12) est configurée pour échanger des données (GS) avec le moyen de locomotion (50) hautement automatisé ou autonome concernant les mesures de service à effectuer.

3. Dispositif (10) selon la revendication 1 ou 2, dans lequel l'unité de communication (12) est configurée pour échanger des données (GS) concernant les mesures de service à effectuer, des données (AD) pour la facturation des mesures de service ou des données (NP) pour une planification d'utilisation du dispositif (10) avec le système dorsal (13, 14).

4. Dispositif (10) selon l'une des revendications précédentes, dans lequel les mesures de service comprennent une ou plusieurs des mesures suivantes : fourniture d'énergie ou de matériaux de fonctionnement au moyen de locomotion (50) hautement automatisé ou autonome, nettoyage du moyen de locomotion (50) hautement automatisé ou autonome, entretien ou réparation du moyen de locomotion (50) hautement automatisé ou autonome, modification d'une configuration du moyen de locomotion (50) hautement automatisé ou autonome, réalisation d'un contrôle du moyen de locomotion (50) hautement automatisé ou autonome et fourniture de matériaux consommables ou de matériaux qui restent temporairement dans les moyens de locomotion aux moyens de locomotion (50) hautement automatisé ou autonome.

5. Dispositif (10) selon l'une des revendications précédentes, dans lequel le dispositif (10) présente un robot de service comme au moins une autre unité de service (15).

6. Dispositif (10) selon l'une des revendications précédentes, dans lequel des barrières lumineuses garantissent qu'aucune personne ne se trouve à l'intérieur du dispositif (10).

7. Dispositif (10) selon l'une des revendications précédentes, dans lequel le dispositif (10) est de conception modulaire.

8. Procédé mis en œuvre par ordinateur permettant de faire fonctionner un dispositif (10) selon l'une des revendications 1 à 7 pour la fourniture de moyens de locomotion (50) hautement automatisés ou autonomes, comportant les étapes consistant à :
- transmettre (40) des données (POS) pour un positionnement à un moyen de locomotion (50) hautement automatisé ou autonome ;
- recevoir (41) des données (GS) concernant des mesures de service à effectuer ;
- effectuer (42) les mesures de service ; et
- transmettre (43) des données (AD) pour une facturation des mesures de service effectuées à un système dorsal (13, 14) ou au moyen de locomotion (50) hautement automatisé ou autonome ;
**caractérisé en ce que** l'au moins une unité de service (15) automatisée est un portique de lavage stationnaire et les données (POS) pour le positionnement amènent le moyen de locomotion (50) hautement automatisé ou autonome à se déplacer de manière autonome vers l'avant et vers l'arrière à travers le portique de lavage.

9. Procédé selon la revendication 8, dans lequel les données (NP) pour une planification d'utilisation du dispositif (10) sont échangées avec le système dorsal (13, 14).

10. Dispositif (20) permettant de faire fonctionner un dispositif (10) selon l'une des revendications 1 à 7 pour la fourniture de moyens de locomotion (50) hautement automatisés ou autonomes, comportant
- une unité de calcul (22) configurée pour déterminer des données (POS) pour un positionnement d'un moyen de locomotion (50) hautement automatisé ou autonome, pour évaluer des données (GS) relatives aux mesures de service à effectuer et pour déterminer des données (AD) pour une facturation des mesures de service effectuées ;
- une interface (21) configurée pour transmettre (40) les données (POS) pour le positionnement au moyen de locomotion (50) hautement automatisé ou autonome, pour recevoir (41) les données (GS) relatives aux mesures de service à effectuer et pour transmettre (43) les données (AD) pour la facturation des mesures de service effectuées à un système dorsal (13, 14) ou au moyen de locomotion (50) hautement automatisé ou autonome ; et
- une unité de commande (23) configurée pour provoquer la réalisation (42) des mesures de service ;
**caractérisé en ce que** l'au moins une unité de service (15) automatisée est un portique de lavage stationnaire et les données (POS) pour le positionnement amènent le moyen de locomotion (50) hautement automatisé ou autonome à se déplacer de manière autonome vers l'avant et vers l'arrière à travers le portique de lavage.
